# EUROPEAN PATENT SPECIFICATION

(11) **EP 4 259 940 B1**
(45) Date of publication and mention of the grant of the patent: **11.12.2024**
(21) Application number: 20833753.5
(22) Date of filing: 14.12.2020
(51) Int. Cl.: F04D 29/02, B29C 65/02, B29C 65/00, F04D 29/62

(54) **CENTRIFUGAL FAN ASSEMBLY FOR A HEAT EXCHANGER SYSTEM IN A VEHICLE**
ZENTRIFUGALGEBLÄSEANORDNUNG FÜR EIN WÄRMETAUSCHERSYSTEM IN EINEM FAHRZEUG
ENSEMBLE VENTILATEUR CENTRIFUGE POUR UN SYSTÈME D'ÉCHANGEUR DE CHALEUR DANS UN VÉHICULE

(43) Date of publication of application: 18.10.2023
(73) Proprietor: VOLVO TRUCK CORPORATION, 405 08 Göteborg (SE)
(72) Inventor: LYGNER, Andreas, 439 53 Åsa (SE)
(74) Representative: Zacco Sweden AB
(86) International application number: PCT/EP2020/086048
(87) International publication number: WO 2022/128064

(56) References cited:
- EP-A1- 3 608 546
- WO-A1-2015/005832
- WO-A2-2009/105208
- JP-A- S5 870 094
- KR-Y1- 200 356 057
- US-A- 5 558 499

## Description

### TECHNICAL FIELD

This disclosure relates to a centrifugal fan assembly comprising an impeller with a plurality of impeller blades, suitable for improving flow of air through a heat exchanger. The disclosure also relates to a corresponding heat exchanger system. The fan assembly and the heat exchanger system can be used in vehicles such as automobiles, trucks, busses, construction vehicles, marine vehicles, etc.

### BACKGROUND

As output power demand of combustion engines continues to increase, so does the cooling capacity required to prevent the combustion engines from over-heating. Electrical and hybrid electrical vehicles also comprise components in need of efficient cooling, such as traction battery systems, fuel cell arrangements, electrical machines, and the like.

Cooling is often achieved with a cooling system comprising a heat exchanger and a fan assembly. Increasing the cooling efficiency of such system is a suitable way of increasing cooling capacity since size can be kept small and cost can remain low. Cooling efficiency can be improved by enhancing and increasing the flow of air through the heat exchanger. WO 2015/005832 A1 discloses an efficient heat exchanger system for a vehicle.

One problem with highly efficient fan assemblies is that the manufacturing is complicated since the assemblies tend to be rather complex. This results in a time consuming and costly manufacturing process. In addition, the tool used for manufacturing is also complex, and it is likely that an excessive number of tools are required, which is a disadvantage. The manufacturing could be simplified by reducing the complexity of the fan assembly, i.e., simplifying the geometry, which, unfortunately, would lower the cooling efficiency of the corresponding cooling system.

JPS5870094A discloses a fan where blades integrally formed with a main plate are coupled together with an annular side plate shaped in the form of a truncated cone using ultrasonic bonding.

US5558499A discloses a centrifugal blower wheel with backward curved comprising a disk, a shroud, and a plurality of airfoil shaped blades.

KR200356057Y1 discloses a blower impeller that has wings having upper and lower coupling protrusions formed to be fixed between the upper and lower plate portions.

WO2009/105208A2 discloses a fan for automotive applications, including a backplate with a plurality of blades, and a fan shroud positioned adjacent to the blades. The shroud is welded to the blades by providing ferromagnetic particles at a first weld location and directing electromagnetic energy toward the ferromagnetic particles to melt surrounding material and structurally join the fan shroud and the blades.

There is, therefore, a need for improved centrifugal fan assemblies which are easy and cost effective to manufacture, and that enable high efficiency cooling systems.

### SUMMARY

It is an object of the present disclosure to provide new centrifugal fan assemblies and corresponding heat exchanger systems, which, among other things, offer low-complexity and low-cost manufacturing, and at the same time offer high performance in terms of, e.g., cooling efficiency.

This object is at least in part obtained by a centrifugal fan assembly for improving flow of air through a heat exchanger according to claim 1.

The fan assembly comprises a first subassembly comprising a first impeller flange and a second subassembly comprising a second impeller flange. Any of the first and second impeller flanges comprises a plurality of integrally formed impeller blades. Thereby the impeller blades and the first and second impeller flanges constitute an impeller. At least one impeller blade arranged on one of the two impeller flanges comprises at least one tab arranged to mate with a corresponding inlet cone arranged on the other of the two impeller flanges. The least one tab is arranged to be deformed when in a mating position with the corresponding inlet cone, thereby securing the two subassemblies together.

The first and the second subassemblies can, e.g., be molded in separate tools. The two subassemblies can then be joined by guidance from the tabs. After that, the tabs can, e.g., be melted to mechanical lock the two subassemblies to each other. The centrifugal fan assembly is easy, quick, and cost-effective to manufacture without compromising on the complexity of the centrifugal fan assembly, which results in a maintained high cooling efficiency of a corresponding heat exchanger system.

The first subassembly comprises a rotatable inlet shroud integrally formed with the first impeller flange. The rotatable inlet shroud is arranged to guide the air flow entering the impeller. The rotatable inlet shroud enables a high-performing corresponding heat exchanger system. Having the shroud integrally formed with the first impeller flange enables easy, quick, and cost-effective manufacturing of the centrifugal fan assembly. The rotatable inlet shroud exhibits together with the first impeller flange a U-shaped cross-section that is open towards the radial outside.

According to aspects, the second subassembly comprises a backplate integrally formed with the second impeller flange. The backplate is arranged to guide the air flow entering the impeller. The backplate enables a high-performing corresponding heat exchanger system. Having the backplate integrally formed with the first impeller flange enables easy, quick, and cost-effective manufacturing of the centrifugal fan assembly. It further provides robustness to the centrifugal fan assembly and the corresponding heat exchanger system.

According to aspects, the backplate is of a conical shape. The back plate may alternatively have a disc-shape. Such shapes allow a compact design of a corresponding heat exchanger system.

According to aspects, the at least one impeller blade arranged on one of the two impeller flanges comprises a plurality of tabs arranged to mate with respective corresponding inlet cones arranged on the other of the two impeller flanges. The tabs are arranged to be deformed when in a mating position with the respective corresponding inlet cones, thereby securing the two subassemblies together. Having a plurality of tabs on an impeller blade allows strong attachment of the two subassemblies and, at the same time, enables simple deformation of the tabs. If, on the other hand, a single larger tab is used, it may securely attach the subassemblies, but it is hard to deform. Using a single small tab is easier to deform but provides weaker attachment.

According to aspects, the first and the second subassemblies comprise plastics, i.e., are made of a plastic material. Plastic materials are cost-effective and easy to manufacture and can be molded easily. Any of the subassemblies may, however, comprise other materials, such as metal or composite materials.

According to aspects, the subassemblies comprise plastics and at least one tab is deformed using a thermoplastic staking technique, preferably any of thermal tooling, cold forming, thermal punch, ultrasonic staking, cold forming, infrared staking, hot air cold upset, impulse staking, and spin riveting.

According to aspects, at least one impeller blade of the centrifugal fan assembly is arranged substantially aligned with the axial direction of the centrifugal fan assembly. According to further aspects, at least one impeller blade is inclined with respect to a radial direction of the centrifugal fan assembly to direct the flow of air in the radial direction when the air is exiting the centrifugal fan assembly. According to other aspects, at least one impeller blade is inclined with respect to an axial direction of the centrifugal fan assembly to direct the flow of air in the axial direction when the air is exiting the centrifugal fan assembly. This way, a more rearwards directed flow of air can exit he fan assembly in a in a heat exchanger system. In this case, the impeller resembles a mixed flow fan.

There is also disclosed herein a vehicle comprising the centrifugal fan assembly according to the discussion above.

There is furthermore disclosed herein a method for producing a centrifugal fan assembly according to claim 11.

There is also disclosed herein a heat exchanger system for a vehicle. The heat exchanger system comprises: at least one heat exchanger; a centrifugal fan assembly according to the discussions above comprising a rotatable inlet shroud; a stationary inlet shroud located between the at least one heat exchanger and the fan assembly, configured for directing air flow exiting the at least one heat exchanger towards the rotatable inlet shroud of the fan assembly; and a stator with a plurality of stationary stator blades located radially or semi-radially outside the impeller for conversion of fluid dynamic pressure to fluid static pressure of the air flow.

It is desirable to increase the static efficiency provided by the fan assembly because the air flow through the heat exchanger generated by the fan assembly is directly coupled to the static pressure difference before and after the heat exchanger. An increased static pressure difference generally results in increased through flow of air, such that improved cooling effect is obtained. Since the total pressure of any point of an air flow is the sum of static pressure and dynamic pressure, the static pressure of a point of the air flow can be increased by decreasing the dynamic pressure of the air flow at that point. Static pressure can be considered representing the potential energy put into the system by the fan. Dynamic pressure, also referred to as velocity pressure, is the kinetic energy of a unit of air flow in an air stream, and is a function of air flow speed and density. Consequently, by reducing the speed of the air flow the static pressure of the air flow increases. Conversion of air flow dynamic pressure into air flow static pressure is realized partly by recovering swirl energy (rotating flow velocity pressure) and partly by controlled radial diffusion of the outlet air flow. By straightening the air flow downstream of the impeller, the rotational component of air movement caused by the rotation of the impeller is reduced, such that the total kinetic energy of the outlet flow is reduced, and by increasing the flow area in the downstream flow direction through the stator the flow speed is decreased, and the static pressure increased correspondingly. Consequently, the cooling efficiency of the heat exchanger system is improved.

### BRIEF DESCRIPTION OF THE DRAWINGS

With reference to the appended drawings, below follows a more detailed description of embodiments of the invention cited as examples. In the drawings:
Figure 1a shows an overview of a heat exchanger system according to the disclosure connected to a combustion engine;
Figure 1b shows a perspective view of the fan assembly and stator according to a first embodiment of the disclosure;
Figure 1c shows a more detailed cross-sectional view of the assembly of Figure 1b;
Figure 2 shows a cross-sectional view of the heat exchanger system according to a second embodiment;
Figure 3 shows a cross-sectional view of the heat exchanger system according to a third embodiment;
Figure 4 shows a cross-sectional view of the heat exchanger system according to a fourth embodiment;
Figure 5 shows a cross-sectional view of the heat exchanger system according to a fifth embodiment;
Figure 6a shows a cross-sectional view of the heat exchanger system according to a sixth embodiment;
Figure 6b shows a cross-sectional view of the heat exchanger system according to a seventh embodiment;
Figures 7a and 7b show different views of an example centrifugal fan assembly; and
Figure 8 is a flowchart illustrating methods.

### DETAILED DESCRIPTION OF EXAMPLE EMBODIMENTS OF THE INVENTION

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

There is disclosed herein a centrifugal fan assembly 3 and corresponding heat exchanger system 1, which, among other things, offer low-complexity and low-cost manufacturing, and at the same time offer high performance in terms of, e.g., cooling efficiency. Various embodiments of the heat exchanger system 1 are described below, which all comprise the disclosed centrifugal fan assembly 3.

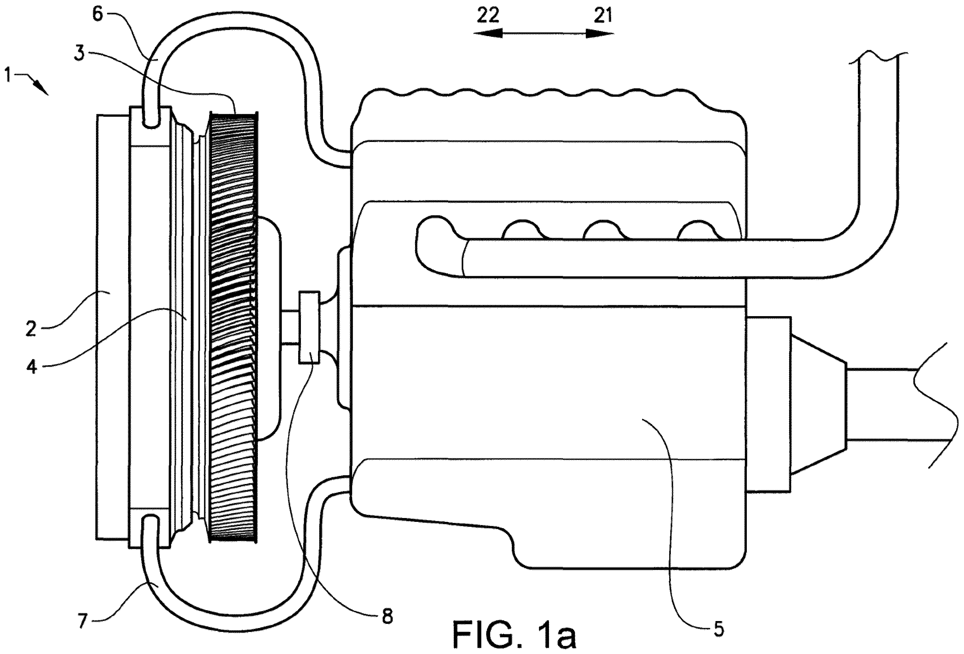

Figure 1a shows a side view of the disclosed heat exchanger system 1 comprising a heat exchanger 2, a centrifugal fan assembly 3, and a stationary inlet shroud 4 located between the heat exchanger 2 and the fan assembly 3. The heat exchanger system 1 is suitable for cooling a circulating cooling fluid of an engine 5, whereby hot cooling fluid from the engine 5 enters for example the top of the heat exchanger 2 via a first fluid pipe 6 and is conveyed back to the engine via a second fluid pipe 7. The heat exchanger 2 is arranged to enable the surrounding air to absorb some of the heat of the cooling fluid, such that less hot cooling fluid is led back to the engine 5. The heat absorption capacity of the air flowing through the heat exchanger 2 is dependent on the air flow rate. A high flow rate results in that heated air is quicker replaced with new cool air, such that a higher heat transfer capacity is attained. An impeller of the fan assembly 3 may be located on a shaft 8 that is mechanically connected to and driven by the crankshaft of the engine 5 via a variable fan clutch (non-showed), which enables variable output power to the fan assembly 3. The fan clutch may be of a visco-type clutch. An electric, pneumatic, hydraulic or any other kind of motor may alternatively be arranged for powering the fan assembly 3.

It is appreciated that the herein disclosed fan assemblies are also suitable for being driven by a separate electric motor, in order to cool one or more components on an electric vehicle or a hybrid electric vehicle lacking combustion engine. Thus, the engine 5 and the means for driving the fan assembly shown in Figure 1a are entirely optional.

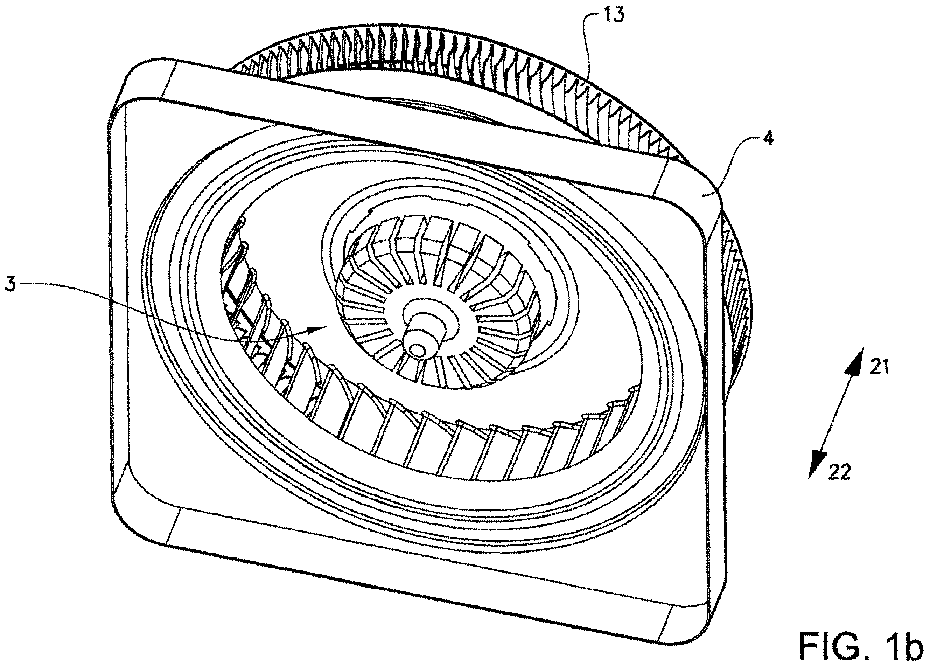

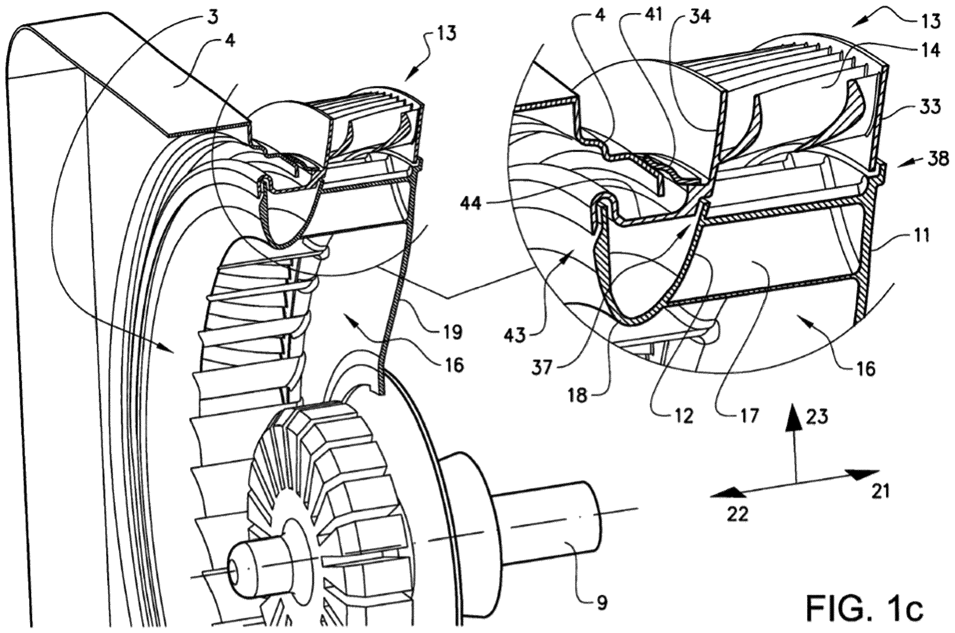

Figure 1b shows a perspective view of the fan assembly 3, stationary inlet shroud 4 and a stator 13 according to a first embodiment of the disclosed heat exchanger system 1, and Figure 1c shows a cross-section of the same assembly from a different view. The heat exchanger 2 is here not showed. The system components relative location will be described in terms of their axial location in the axial direction, and a rearward axial direction is defined by arrow 21, a forward axial direction is defined by arrow 22 and a radial direction, which is perpendicular to axial direction, is defined by arrow 23. The stationary inlet shroud 4 serves to guide air exiting the heat exchanger 2 towards the fan assembly 3, to adapt a rectangular shape of the heat exchanger 2 to the circular shape of the fan assembly 3, as well as reducing leakage of air as will be discussed more in detail later in the disclosure.

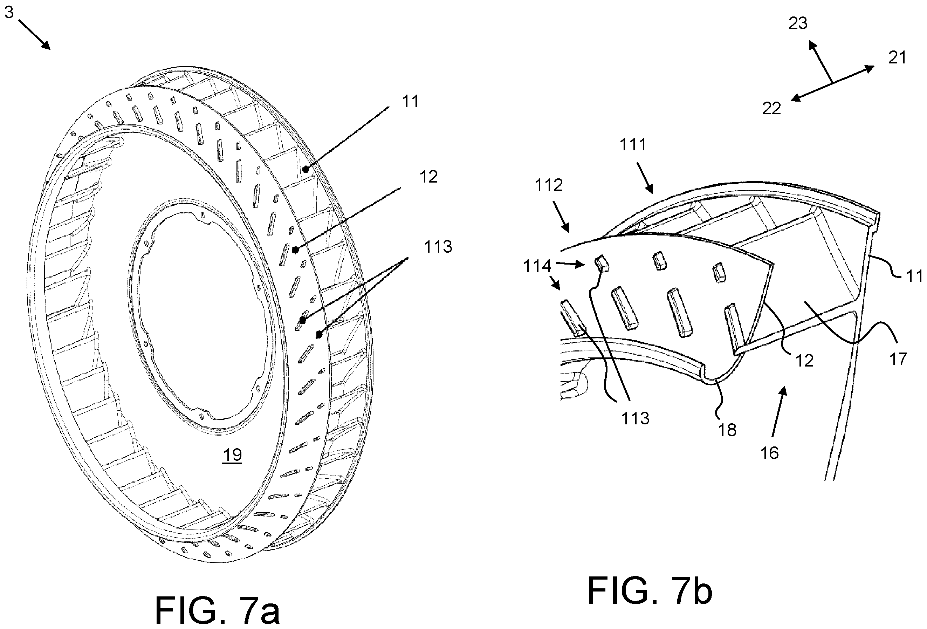

Figures 7a and 7b shows details of the disclosed centrifugal fan assembly 3, which is suitable for improving flow of air through a heat exchanger 2. The fan assembly 3 generally has a circular shape seen from a front direction. The fan assembly 3 comprises a first subassembly 112 comprising a first impeller flange 12 and a second subassembly 111 comprising a second impeller flange 11. Any of the first and second impeller flanges 11, 12 comprises a plurality of integrally formed impeller blades 17. Thereby the impeller blades 17 and the first and second impeller flanges constitute an impeller 16. At least one impeller blade 17 arranged on one of the two impeller flanges 11, 12 comprises at least one tab 113 arranged to mate with a corresponding inlet cone 114 arranged on the other of the two impeller flanges. The least one tab 113 is arranged to be deformed when in a mating position with the corresponding inlet cone 114, thereby securing the two subassemblies 111, 112 together.

A tab is an integral part of an impeller blade, and is more preferably monolithically formed on the impeller blade. After the tab is placed in a corresponding inlet cone, the end of the tab is deformed to expand, thereby joining the members together. In other words, the tabs constitute protrusions on the impeller blade which are configured to be received in through-holes and to extend out on the other side of the through-hole. By deforming the portion sticking out on the other side of the though hole, the first and second impeller flanges are locked in position with respect to each other.

The part referred to as the first impeller flange 12 may also be referred to as an impeller inlet part or inlet cone. The part referred to as the second impeller flange 11 may also be referred to as an impeller base.

As mentioned, any of the first and second impeller flanges 11, 12 comprises a plurality of integrally formed impeller blades 17. This means that the impeller blades can be integrally formed on the first impeller flange 12 and/or on the second impeller flange 11. Of course, both impeller flanges may comprise blades in an interleaved manner, but, although a technically feasible option, this would represent a cumbersome alternative.

The first and the second subassemblies are preferably molded in separate tools. The two subassemblies can then be joined by guidance from the tabs. After that, the tabs can be melted or otherwise deformed to mechanically lock the two subassemblies to each other.

The centrifugal fan assemblies disclosed herein are easy, quick, and cost-effective to manufacture without compromising on the complexity of the centrifugal fan assembly, which results in a maintained high cooling efficiency of the corresponding heat exchanger system.

The first subassembly 112 of the centrifugal fan assembly 3 comprises a rotatable inlet shroud 18 integrally formed with the first impeller flange 12. The rotatable inlet shroud 18 is arranged to guide the air flow entering the impeller 16. Having the shroud integrally formed with the first impeller flange enables easy, quick, and cost-effective manufacturing of the centrifugal fan assembly.

The second subassembly 111 of the centrifugal fan assembly 3 may comprise a backplate 19 integrally formed with the second impeller flange 11. The backplate 19 is arranged to guide the air flow entering the impeller 16. The back plate can also be arranged to structurally connect the second impeller flange 11 with a rotatable shaft 9 in a heat exchanger system 1. The backplate 19 may comprise a conical shape. The conical shape may be inclined in the rearward direction 21. The back plate may alternatively have a disc-shape or other shapes.

An impeller blade 17 may have a shape of a parallelogram when viewed in a sideview with respect to the axial direction, with an elongation in an axial direction of the centrifugal fan assembly 3. Other shapes, such as rhomboid, or more general are also possible.

At least one impeller blade 17 of the centrifugal fan assembly 3 may be arranged substantially aligned with the axial direction of the centrifugal fan assembly 3. Furthermore, at least one impeller blade 17 of the centrifugal fan assembly 3 may be inclined with respect to a radial direction of the centrifugal fan assembly 3 to direct the flow of air in the radial direction when the air is exiting the centrifugal fan assembly 3. Also, at least one impeller blade 17 of the centrifugal fan assembly 3 may be inclined with respect to an axial direction of the centrifugal fan assembly to direct the flow of air in the axial direction when the air is exiting the centrifugal fan assembly 3. This way, a more rearwards directed 21 flow of air can exit the fan assembly 3 in a in a heat exchanger system 1. In this case, the impeller resembles a mixed flow fan.

The impeller 16 preferably comprises at least 10 blades, more preferably at least 20 blades, and still more preferably at least 30 blades.

According to aspects, at least one impeller blade 17 arranged on one of the two impeller flanges 11, 12 comprises a plurality of tabs 113 arranged to mate with respective corresponding inlet cones 114 arranged on the other of the two impeller flanges. The tabs 113 are arranged to be deformed when in a mating position with the respective corresponding inlet cones 114, thereby securing the two subassemblies 111, 112 together. Having a plurality of tabs on an impeller blade allows a strong attachment of the two subassemblies and, at the same time, enables simple deformation of the tabs. If on the other hand, a single larger tab is used, it may securely attach the subassemblies, but is hard to deform. Using a single small tab is easier to deform but provides weaker attachment.

Figures 7a and 7b show an example centrifugal fan assembly 3 wherein all impeller blades comprise two respective tabs. Both tabs are continuations of the impeller blade in the forward axial direction 22. In this example, one of the two tabs is larger than the other. The tabs can have many other shapes, such as cylindrical protrusions. In some ways, a tab can be seen as a boss. An inlet cone is preferably a through hole arranged to mate with a snug fit with a tab. The fit should allow easy assembly while allowing high precision placement of the two subassemblies relative to each other.

The first and the second subassemblies 111, 112 preferably comprise plastics. Examples of plastics comprise Polyethylene terephthalate (PETE or PET), Polyethylene (PE), Polypropylene (PP), Acetal (Polyoxymethylene, POM), and Nylon. However, any of the subassemblies may comprise other materials, such as metal or composite materials.

The deformation of a tab can be achieved in many different ways. For example, the tab can be deformed to expand by melting the end of the tab such that it expands. In this case, it is advantageous with a plurality of smaller tabs per impeller rather than one larger tab since smaller tabs have less volume per surface area, which makes them easier to melt.

If the subassemblies comprise plastics, at least one tab 113 may be deformed using a thermoplastic staking technique, preferably any of thermal tooling, cold forming, thermal punch, ultrasonic staking, cold forming, infrared staking, hot air cold upset, impulse staking, and spin riveting. Using any staking method, it is advantageous with a plurality of smaller tabs per impeller rather than one larger tab.

There is also disclosed herein a vehicle comprising the centrifugal fan assembly 3 according to the discussions above.

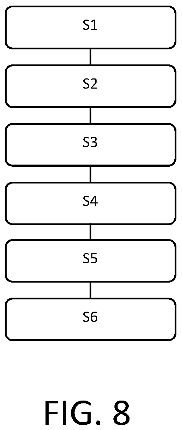

There is also disclosed herein a method for producing a centrifugal fan assembly 3, as is shown in Figure 8. The method comprises:
providing S1 a first subassembly 112 comprising a first impeller flange 12, wherein the first subassembly comprises a rotatable inlet shroud 18 integrally formed with the first impeller flange;
providing S2 a second subassembly 111 comprising a second impeller flange 11;
arranging S3 a plurality of integrally formed impeller blades 17 on any of the first and second impeller flanges 11, 12, thereby the impeller blades 17 and the first and second impeller flanges constitute an impeller 16, and wherein the rotatable inlet shroud exhibits together with the first impeller flange a U-shaped cross-section that is open towards the radial outside;
arranging S4 at least one tab 113 on at least one impeller blade 17 arranged on one of the two impeller flanges 11, 12;
arranging S5 a corresponding inlet cone 114 on the other of the two impeller flanges 11, 12, wherein the at least one tab 113 is arranged to mate with the corresponding inlet cone 114; and
deforming S6 the least one tab 113 when in a mating position with the corresponding inlet cone 114, thereby securing the two subassemblies 111, 112 together.

As mentioned, there is disclosed herein a heat exchanger system 1 for a vehicle. The heat exchanger system comprises: at least one heat exchanger 2; a centrifugal fan assembly 3 according to the discussions above comprising a rotatable inlet shroud; a stationary inlet shroud 4 located between the at least one heat exchanger 2 and the fan assembly 3, configured for directing air flow exiting the at least one heat exchanger 2 towards the rotatable inlet shroud 18 of the fan assembly 3; and a stator 13 with a plurality of stationary stator blades 14 located radially or semi-radially outside the impeller 16 for conversion of fluid dynamic pressure to fluid static pressure of the air flow.

Below follow details and various embodiments of the disclosed heat exchanger system 1.

The rotatable inlet shroud 18 in the disclosed heat exchanger system 1 extends forwards from the impeller 16 towards the stationary inlet shroud 4. The rotatable inlet shroud 18 serves to guide the incoming air to the impeller 16 for reducing flow distortions near and within the impeller 16. For this purpose, the rotatable inlet shroud 18 exhibits together with the second flange 12 of the impeller a U-shaped cross-section that is open towards the radial outside.

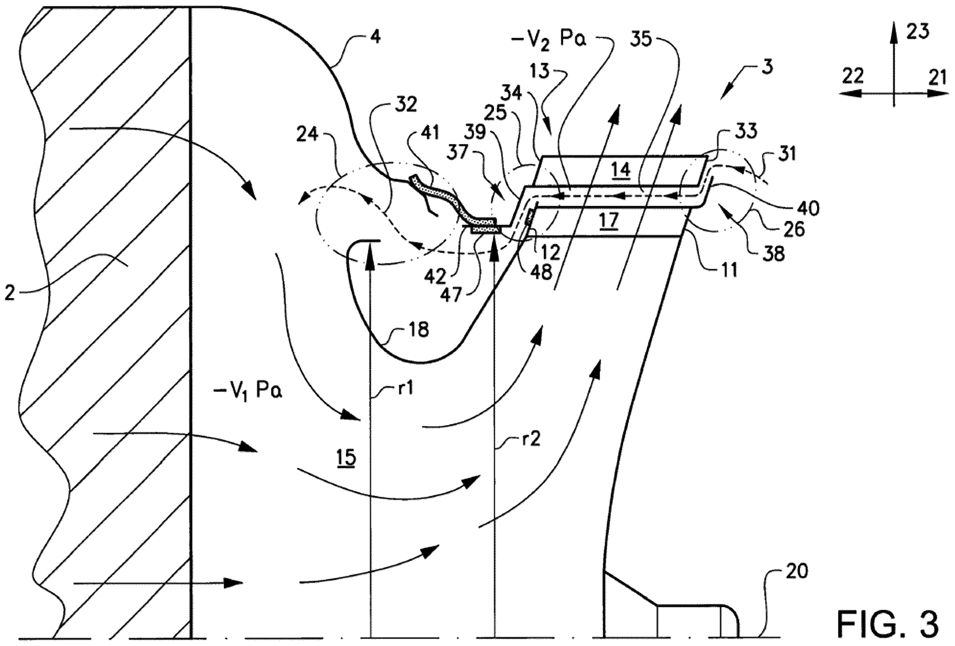

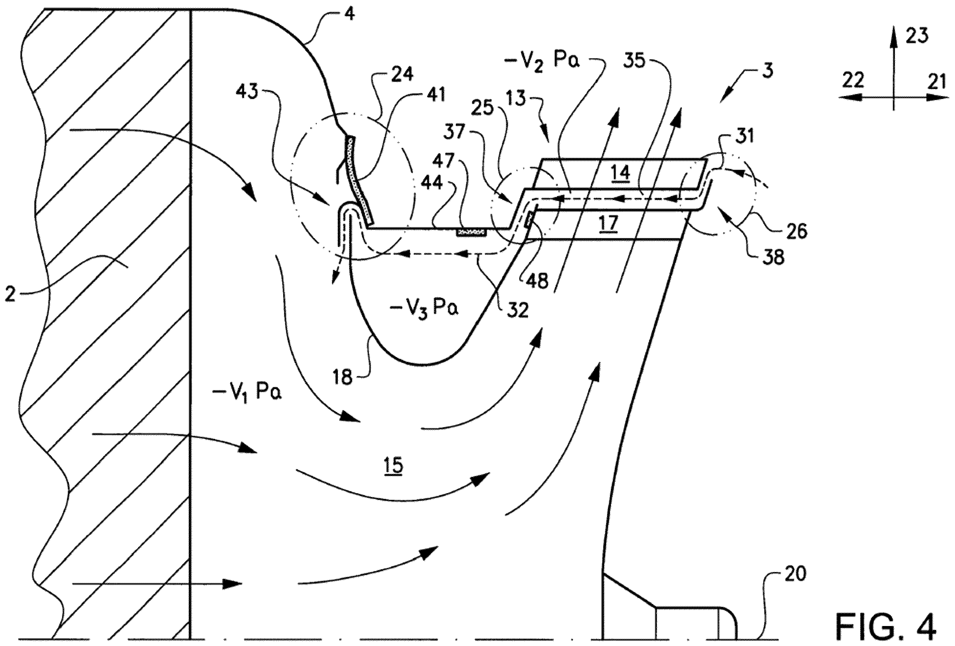

A stator 13 comprising a plurality of stationary stator blades 14 located radially or semi-radially outside the impeller 16 for conversion of fluid dynamic pressure to fluid static pressure of the air flow. Both the impeller 16 and stator 13 are mounted to the propulsion source 5, such that their internal relative movement is relatively small. These small relative movements enable small dimensional and assembly tolerances, such that high performance seals can be designed. There fan assembly 3 is free from a housing surrounding the impeller 16 and guiding the air flow exiting the impeller 16 to one or more selected outlets. Instead, air exiting the impeller 16 and stator 13 is free to flow in substantially all radial and mixed radial/axial directions, except when possibly encountering surrounding engine components, such as pipes, etc. The stator 13 has an annular shape. The stator 13 comprises a large number of blades 14, preferable more than the number of blades 17 of the impeller 16, and preferably at least 40 blades, more preferably at least 50 blades, and still more preferably at least 60 blades. The blades 14 are supported by at least one stator flange. Preferably, the blades 14 are supported between a first stator flange 34 and a second stator 33 flange that is spaced axially apart from the first flange 34. The blades 14 are connected to the first and second stator flanges 34, 33 on opposing edges. Each of the stationary inlet shroud 4, impeller 16 and stator 13 is preferably made of plastic or composite material. The heat exchanger system according to the first embodiment further comprises a first, second and third sealing arrangement 37, 38, 43, an annular stator shroud 44 and an elastic seal 41, which parts will be described more in detail below, in particular in relation to Figure 3 and Figure 4.

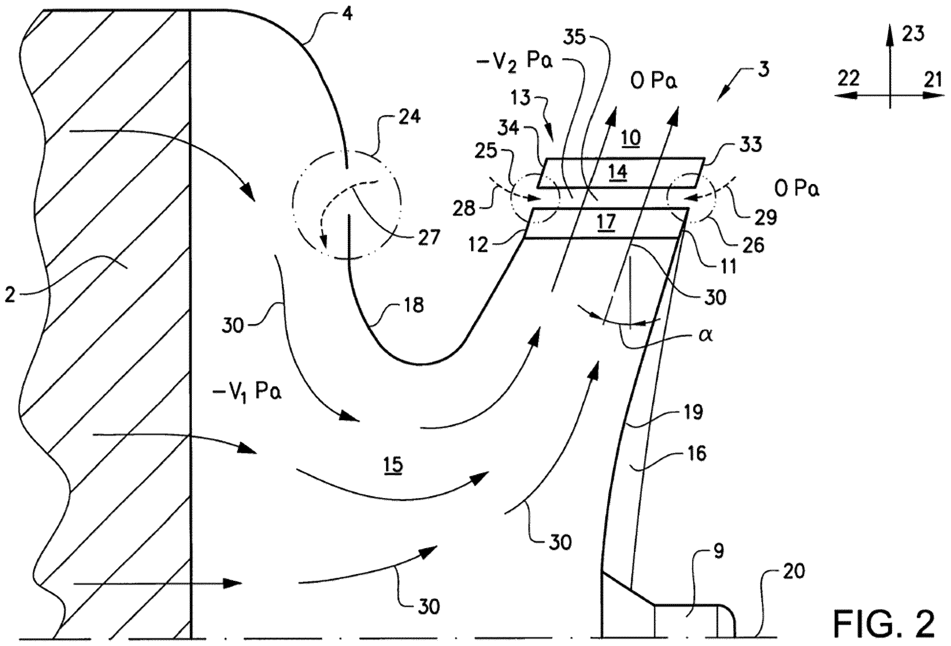

Figure 2 shows a schematic cross-sectional view of the heat exchanger system 1 according to a second embodiment. A rotational axis 20 is shown extending in the axial direction. The heat exchanger 2 is arranged such that during use of the heat exchanger system 1 air flows substantially in an axial direction through the heat exchanger 2. The stationary inlet shroud 4 is preferably mounted to the heat exchanger 2 but may alternatively be mounted directly the chassis of the vehicle. The flow direction just outside the outlet 10 of the fan assembly 3 is preferably slightly inclined rearwards with an angle α for enabling the fan assembly 3 having a through flow with low level of distortions. However, a fan assembly 3 generating a more radial flow at the outlet 10 of the fan assembly 3 is possible, especially when the axial space of the heat exchanger system 1 should be minimized.

The purpose of the centrifugal fan assembly 3 is to increase the flow rate of air through the heat exchanger system 1 for increasing the cooling capacity of the heat exchanger system 1. During operation of the fan assembly 3 it creates a negative static pressure V₁ Pascal (Pa) in the area rearwards of the heat exchanger 2 and at the inlet 15 of the fan assembly 3, such that a pressure difference is created axially over the heat exchanger 2. This axial pressure difference induces the desired axial flow of air through the heat exchanger 2. The air flow through the heat exchanger system 1 is schematically illustrated by arrows 30 in Figures 2-6b.

The air pressure surrounding the heat exchanger system 1 is here simplified set to 0 Pa pressure gauge for schematically illustrating the pressure distribution within and surrounding the heat exchanger system 1. The stator 13 induces a certain negative static pressure V₂ Pa within the radial gap 35 between the impeller blades 17 and stator blades 14 due to the higher air flow speed within the radial gap 35 than downstream of the stator 13. The static pressure V₁ at the inlet of the impeller 16 is the sum of the pressure difference between the impeller inlet and outlet and the pressure difference between the stator inlet and outlet. The static pressure difference of the impeller may typically be about 5-10 times larger than the static pressure difference V₂ of the stator. Obviously, essentially all surrounding air having a pressure gauge of about 0 Pa will tend to flow to the negative pressure area rear of the heat exchanger 2 and within the fan assembly 3 and three leakage areas can be identified. A first leakage area 24 is formed at the gap between the stationary inlet shroud 4 and fan assembly 3, a second leakage area 25 is formed at the forward end of the radial gap 35 between the impeller blades 17 and stator blades 14, and a third leakage area 26 is formed at the rearward end of the radial gap 35. Leakage flow is indicated by first, second and third dashed arrows 27, 28, 29, respectively.

Air leakage has a negative effect on fan efficiency and solutions for reducing the leakage is shown in the other embodiments of the disclosure. Since both the impeller 16 and stator 13 are mounted to the engine 5 they exhibit relatively low relative structural motion, i.e., the shape and location of the radial gap 35 between the impeller 16 and stator 13 is relatively stable, thereby enabling efficient use of non-contact sealing arrangements, such as labyrinth-type sealing arrangements. The stationary inlet shroud 4 however is mounted to the chassis, such that relatively large amplitude relative motion occurs at the first leakage area 24. The first leakage area 24 is therefore not suitable for being sealed with a non-contact sealing arrangement such as a labyrinth-type sealing arrangement, because non-contact sealing arrangement tend to have a poor performance when the leakage path through the sealing arrangement is too large. And if a labyrinth-type sealing arrangement having a small internal leakage path is provided it will have problems with contact between different parts forming the sealing, such that damages, noise and increased friction may occur.

A third embodiment of the heat exchanger system 1 is shown in Figure 3. The second and third leakage areas 25, 26 are each sealed by first and second labyrinth-type sealing arrangements 37, 38, respectively. The first labyrinth- type sealing arrangement 37 comprises an annular projecting shield 39 extending from the first stator flange 34 and axially covering the radial gap 35. Similarly, the second labyrinth-type sealing arrangement 38 comprises an annular projecting shield 40 extending from the second impeller flange 11 and axially covering the radial gap 35. Air entering or exiting the radial gap 35 must consequently change direction at least once, such that a tortuous path for the leaking air provided, thereby reducing leakage. Furthermore, the first leakage area 24 is sealed by means of an elastic seal 41, which seals the gap between the stationary inlet shroud 4 and fan assembly 3. The elasticity form and size of the elastic seal 41 is selected to uphold the sealing performance also upon large amplitude internal motion between the stator 13 and stationary inlet shroud 4. The elastic seal 41 is fastened to at least one of the stationary inlet shroud 4 and the stator 13. Preferably, the elastic seal 41 is fastened to one of the stationary inlet shroud 4 and the stator 13 and only abutting the other part under pre-stress. Thereby the assembly and disassembly of the parts is simplified. A further aspect for improving manufacturing and servicing of the heat exchanger system 1 is to make the fan assembly 3 axially mountable/dismountable without need for removal of the first and second sealing arrangements 37, 38. This is here attained by keeping the maximal radial extension η of the rotatable inlet shroud 18 smaller than the minimum radial extension r₂ of the stator side of the first labyrinth-type sealing arrangement 37, and by providing the annular projecting shield 39 of the first labyrinth-type sealing arrangement 37 on the stator and the annular projecting shield 40 of the second labyrinth-type sealing arrangement 38 on the impeller 16. Thereby, the impeller 16 and stator 13 can be disassembled simply by axial relative displacement.

In the embodiment of Figure 3, the elastic seal 41 contacts an extension 42 of the first labyrinth-type sealing arrangement 37. The elastic seal 41 comprises an elastic sealing sleeve. The rotatable inlet shroud 18 ends at a safe distance from the stationary inlet shroud 4 for eliminating any mutual contact also during severe relative vibration motion. A first leakage flow 31 will flow through the second labyrinth-type sealing arrangement 38 and enter the radial gap 35 at the third leakage area 26. A second leakage flow 32 will, due to the pressure difference between the radial gap 35 (-V₂ Pa) and the inlet of the fan assembly 15 (-V₁ Pa), flow out of through the first labyrinth-type sealing arrangement 37 and into the inlet 15 of the fan assembly 3. However, the first and second leakage flows 31, 32 are small and enable a high cooling and fan efficiency.

The fan assembly 3 may further be provided with stationary flow straightening devices 47 for straightening any air flow leaking out from the radial gap 35 between the impeller blades 17 and stator blades 14 and back into the inlet 15 of the impeller 16. The air flow leaking out from the radial gap 35 has a rotational motion component due to the rotational movement of the impeller 16, as well as an axial motion component induced by the leakage flow. The air flow entering the fan assembly at the inlet 15 has however mainly an axial motion component. The mixture of the axial/radial leakage flow with the axial inlet flow from the heat exchanger may give raise to flow distortions in the area of mixture and behind, which distortions has a negative effect on fan efficiency. By providing flow straightening devices 47 for straightening any air flow leaking out from the radial gap 35 the distortions will decrease. The flow straightening devices 47 are preferably realized by a plurality of circumferentially spaced apart projecting blades that extend more or less in the axial direction. The blades may have, seen in a forward direction, a reduced inclination with respect to the axial direction curvature for straightening the swirling leakage flow to a straighter axial flow. The blades may be provided internally in the area of the first and/or third sealing arrangements 37, 43 and/or on the interior side of the stator shroud 44. The blades preferably project from a support surface so as to extend into the leakage flow.

The impeller 16 and/or stator 13 may further comprise sliding contact members 48 for reducing noise, damages, and vibration upon any contact between the rotating impeller 16 and stationary stator 13. The contact members are preferably realized by a plurality of circumferentially spaced apart projections made of rubber or plastic material. The projections may typically be provided axially between any impeller and stator parts. In Figure 3, the contact members 48 are secured to the first flange 12 of the impeller 16 and projection axially in the direction of the annular shield 39 of the stator 13. In case of excessive vibrations, the stator 13 and impeller 16 may contact each other then it is better if the induced contact stress is transferred via the contact members 48. Obviously, the contact members may have many other forms, sizes and shapes and be located in various other locations between the impeller 16 and stator 13, or any parts that are fastened or associated with the impeller 16 and stator 13. The contact members 48 and flow straightening devices 47 may alternatively be combined into a single piece by providing the flow straightening devices 47 on a stationary part of the first sealing arrangement 37 and forming them to withstand a certain level of contact with the impeller upon mutual sliding contact.

A fourth embodiment of the heat exchanger system 1 is shown in Figure 4. Many aspects of this embodiment are identical those of the third embodiment, but with the difference that the second leakage flow 32 is further reduced for improved fan efficiency. The second leakage flow 32 is reduced by adding an additional labyrinth-type sealing arrangement along the path of the second leakage flow 32, namely at the fan assembly inlet 15. This third labyrinth-type sealing arrangement 43 is arranged to seal the gap existing between the rotatable inlet shroud 4 and an annular stator shroud 44 that extends forwards from the stator 13. The stator shroud 44 is preferably integrally formed with stator 13 and assists in effectively preventing any leakage from the outside of the fan assembly 3 from entering the inlet 15 of the fan assembly 3. Since both the stator shroud 44 and rotatable inlet shroud 18 are mounted to the engine 5 they will exhibit small internal relative motion, such that a high-performance seal with small tolerances can be provided at third labyrinth-type sealing arrangement 43. The elastic seal 41 is here arranged to sealingly contacting the stationary inlet shroud 4 and part of the third labyrinth-type sealing arrangement 43. However, the elastic seal 41 may alternatively sealingly contact other parts of the stator 13 or stator shroud 44. By means of the third labyrinth-type sealing arrangement 43 the intermediate air volume located between the first and third labyrinth-type sealing arrangements 37, 43 exhibits an intermediate negative static pressure V₃ Pa. The intermediate negative static pressure V₃ will be lower than the pressure V₂ within the radial gap 35 and higher than the negative pressure V₁ at the inlet 15 of the fan assembly 3. An additional advantage of the third sealing arrangement 43 is a better control of the location of direction of the second leakage flow 32 upon entering the main air flow 30 through the heat exchanger system 1, such that flow distortions can be further reduced.

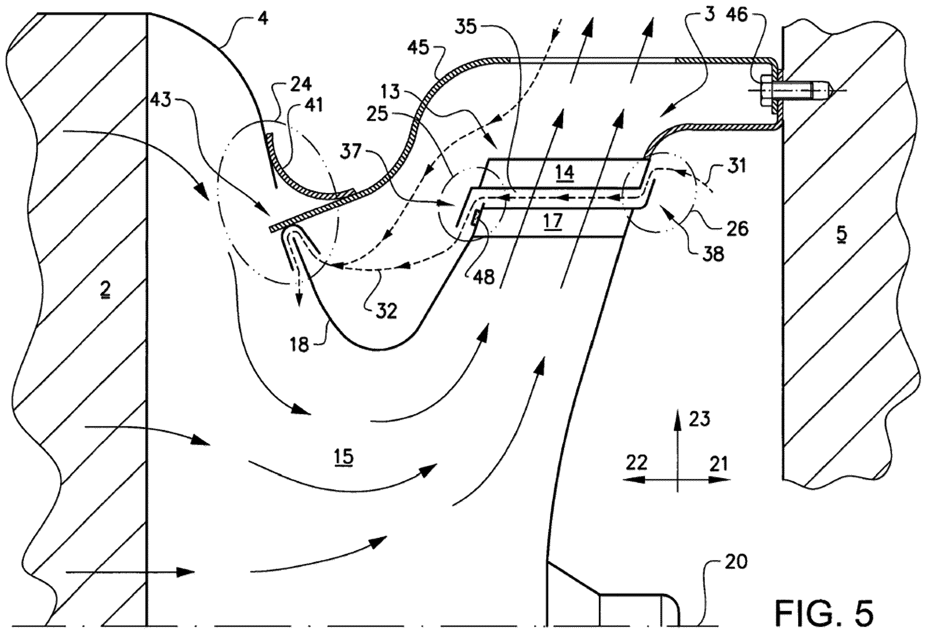

A fifth embodiment of the disclosure is shown in Figure 5. This design differs from the design of Figure 4 mainly in terms of the member contacting the elastic seal 41. In Figure 4 the elastic seal 41 contacts the stationary inlet shroud 4 and part of the third labyrinth-type sealing arrangement 43. However, as already mentioned, the elastic seal 41 may contact any member mounted to the propulsion source 5, and as an alternative to contacting part of the third labyrinth-type sealing arrangement 43 the elastic seal 41 is arranged to contact a support member 45 mounted to the propulsion source 5 rearwards of the stator 43. The support member 45 is formed of a metal or plastic panel that may be mounted to the propulsion source 5 using the same mounting means 46 as the stator 13. Obviously, the elastic seal 41 may alternatively be contacting a member of a third sealing arrangement 43 that is fastened to the support member 45. The gap has increased leakage due to the lack of sealing capacity between the stator 13 and the third sealing arrangement 43, such that more air, and air having less negative pressure than the air of the radial gap 35, has access to the third sealing arrangement 43. Moreover, the stability of the support member 45 in the area of the third sealing arrangement 43 may be lower compared with using a stator shroud 44. Using a stator shroud design, as shown in Figure 4, is thus in most circumstances advantageous in terms of sealing and cooling efficiency.

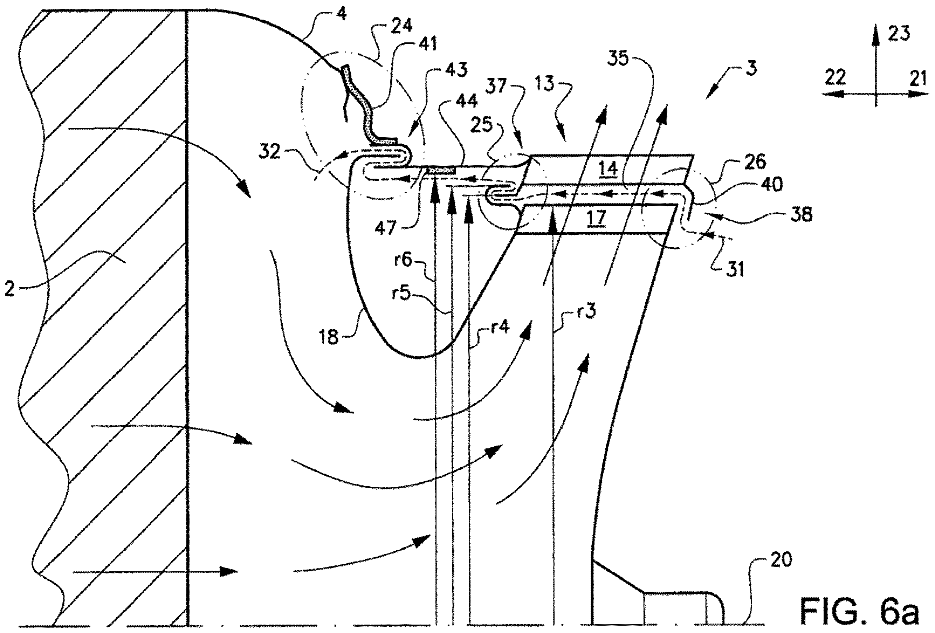

A sixth embodiment is disclosed in Figure 6a. The sixth embodiment is functionally very similar to the fifth embodiment in terms of sealing performance and fan efficiency and comprises an elastic seal 41 at the first leakage area 24, first and second labyrinth-type sealing arrangements 37, 38 at the second and third leakage areas 25, 26 respectively, and a third labyrinth-type sealing arrangement 43 arranged to seal the gap between the rotatable inlet shroud 18 and the annular stator shroud 44. The advantage of the sixth embodiment is the configuration of the first, second and third labyrinth-type sealing arrangements 37, 38, 43 which all enable axial mounting and/or dismounting of the stator 13 and impeller 16 without any modification of the labyrinth-type sealing arrangements 37, 38, 43. Axial relative displacement is the only required action for performing the assembly or disassembly. This advantage is realized by arranging each of the labyrinth-type sealing arrangements 37, 38, 43 to enable axial separation or mounting of the labyrinth-type sealing arrangement 37, 38, 43, and by locating the labyrinth-type sealing arrangements 37, 38, 43 increasingly radially spaced from the rotational axis 20 along the axial direction of the heat exchanger system, such that the labyrinth-type sealing arrangements 37, 38, 43 do not interfere with each other during axial displacement of the fan assembly 3. A further advantage of this design is enablement of reduced tolerances within the labyrinth-type sealing arrangements 43, 37, 38 because the fan assembly expands due to deformation more in the axial direction than the radial direction during operation of the fan assembly. Consequently, the tolerances of the labyrinth-type sealing arrangements 43, 37, 38 can be made smaller when arranged along the axial direction.

One such arrangement is shown in Figure 6a where the fan assembly 3 can be dismounted by displacing the impeller in the forward direction and/or the stator in the rearward direction. Where the second labyrinth-type sealing arrangement 38 is of a simple type, such as comprising merely an annular projecting shield 40 that is located rearwards of the impeller 16 and axially covering the radial gap 35, then it is ensured that the projecting shield 40 extends radially inwards from the stator 13, such that the impeller 16 can be axially displaced towards the forward direction 22. An annular projecting shield 40 that axially covers the radial gap 35 generally force the leakage flow to exhibit at least one 90 degrees turn before entering the radial gap 35.

Where the labyrinth-type sealing arrangement is slightly more complex, such as comprising one U-shaped section of a first part of the seal cooperating with an I-shaped projection of a second part of the seal, where the I-shaped section is located partly within the U-shaped section, then the U-shaped section must be open in an axial direction. In Figure 6a the first labyrinth-type sealing arrangement 37 exhibits a U-shaped section that is located on the impeller 16 and is open in a rearward direction 21 , such that the impeller 16 can be axially displaced towards the forward direction 22 Similarly, also the third labyrinth-type sealing arrangement 43 comprises a U- shaped section of a first part of the seal cooperating with an I-shaped projection of a second part of the seal, where the I-shaped section is located partly within the U-shaped section. Also, this U-shaped section must be open axially in a rearward direction 21 when located on the stator shroud 44, such that the impeller 16 can be axially displaced in the forward direction 22. Furthermore, a maximal radial extension r₃ of the impeller blades 17 and impeller side of the second labyrinth-type sealing arrangement 38 must be smaller than the minimum radial extension r4 of the stator side of the first labyrinth-type sealing arrangement 37, and a maximal radial extension r5 of the impeller side of the first labyrinth-type sealing arrangement 37 must be smaller than the minimum radial extension r6 of the stator shroud 44 and stator side of the third labyrinth-type sealing arrangement 43. Thereby, the impeller 16 and stator 13 can be assembled and disassembled simply by axial relative displacement.

The elastic seal 41 is in this embodiment arranged to contact the stationary inlet shroud 4 and the stator side of the third labyrinth-type sealing arrangement 43. Obviously, the elastic seal 41 could alternatively be contacting any other part of the stator 13 or stator shroud 44 with any effect on the sealing efficiency of the fan assembly 3.

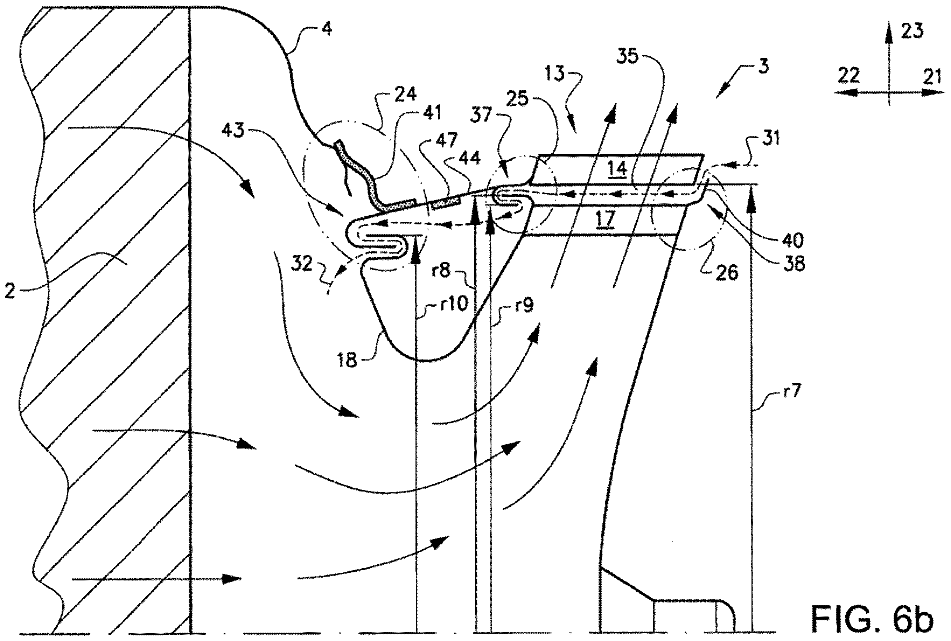

A seventh embodiment is disclosed in Figure 6b. The functionality of the seventh embodiment is identical to the sixth embodiment and varies essentially only on the direction of axial mounting and/or dismounting of the impeller 16 and stator 13. In the heat exchanger system 1 of Figure 6b the fan assembly 3 can be dismounted by moving the impeller 16 in the rearward direction 21 and/or the stator 13 in the forward direction 22. The second labyrinth-type sealing arrangement 38 comprises a projecting shield 40 extending radially outwards from the impeller 16, such that the impeller 16 can be axially displaced in the rearward direction 21. The annular projecting shield 40 axially covers the radial gap 35 and generally forces the leakage flow to exhibit at least one 90 degrees turn before entering the radial gap 35. The first labyrinth-type sealing arrangement 37 exhibits a U-shaped section that is located on the stator 13 and being open in a rearward direction 21, such that the impeller 16 can be axially displaced in the rearward direction 21. The U-shaped section of the third labyrinth-type sealing arrangement 43 is located on the stator shroud 44 and must be open axially in a rearward direction 21, such that the impeller 16 can be axially displaced in the rearward direction 21. Furthermore, a minimum radial extension r₇ of the stator blades 14 and stator side of the second labyrinth-type sealing arrangement 38 must be larger than the maximal radial extension r₈ of the impeller side of the first labyrinth-type sealing arrangement 37, and a minimal radial extension r₁₀ of the stator side of the first labyrinth-type sealing arrangement 37 must be larger than the maximum radial extension r₁₀ of the rotatable inlet shroud 18. Thereby, the impeller 16 and stator 13 can be disassembled simply by axial relative displacement.

The elastic seal 41 is in the seventh embodiment arranged to contact the stationary inlet shroud 4 and stator shroud 44. Obviously, the elastic seal 41 could alternatively be contacting any other part of the stator 13 or stator side of the third labyrinth-type sealing arrangement 43 without any effect on the sealing efficiency of the fan assembly 3.

Clearly, large variations of the first, second and third labyrinth-type sealing arrangements 37, 38, 43 are possible in terms of design and complexity. Also, use of other types of non-contact type sealing arrangements is possible, as well as a large number of different contact type sealing arrangements. For example, a brush seal is an air-to-air seal that provides an alternative to labyrinth-type seals. The brush seal typically comprises many densely packed wire filaments fused between two metallic plates. Brush seals offer many advantages when compared with traditional seals. Unlike the labyrinth seal, a brush seal is designed as a contact seal, i.e., to come in contact with the other part to provide a positive seal. The flexibility of the wires enables the seal to automatically adjust to accommodate vibrations without being permanently damaged.

A typical value for the minimum distance between stationary inlet shroud 4 and fan assembly 3 is 25 millimeters for avoiding any contact therebetween. A typical value for the minimum distance between impeller blades 17 and stator blades 14 is about 6 millimeters for reducing leakage in and out of the gap 35, as well as increasing fan efficiency. The size of the blades depends on the specific application, and may typically for large engines have an axial length of about 100 millimeters.

The stator 13 may be formed in at least two parts that can be assembled into a single stator 13. The multipart stator 13 is preferably divided in an axial plane into at least two parts for enabling mounting on the impeller 16.

The radial gap 35 between impeller blades 17 and stator blades 14 is defined by the minimum distance between the impeller blades 17 and stator blades 14 in a direction essentially perpendicular the direction of elongation of the blades 14, 17. Consequently, if the blades are inclined with respect to the axial direction then the gap is also measured in said inclined direction.

The term "elastic" in elastic seal means that the seal has the capacity to deform to a certain extent without any reduction in terms of sealing performance. The elasticity of the elastic seal may be provided by the material characteristics, such as a rubber material or certain more elastic plastic materials, and/or by means of structural characteristics of the seal, such as bellows or corrugations that provides the elasticity of the seal, without the material itself being elastic. The term semi-radially refers to a direction between a pure radial direction and a pure axial direction, i.e., an angle above 0 degrees and below 90 degrees with respect to an axial direction. Stator blades being located semi- radially outside the impeller may thus for example be located rearwardly inclined outside of the impeller, resembling a mixed flow fan. Reference signs mentioned in the claims should not be seen as limiting the extent of the matter protected by the claims, and their sole function is to make claims easier to understand.

As will be realized, the disclosure is capable of modification in various obvious respects, all without departing from the scope of the invention, which is defined by appended claims. Each of the examples of the disclosure of Figures 1 - 6b exhibit a certain type and design of the labyrinth-type sealing arrangements, but the illustrated figures and layouts not restrictive and many various designs of the sealing arrangement are possible. One, two or all of the leakage locations 24-26 may also lack a sealing arrangement as shown in Figure 2. Figures 7a and 7b show examples of the disclosed centrifugal fan assembly 3. Accordingly, the drawings and the description thereto are to be regarded as illustrative in nature, and not restrictive.

## Claims

1. A centrifugal fan assembly (3) for improving flow of air through a heat exchanger (2), the fan assembly (3) comprising:
a first subassembly (112) comprising a first impeller flange (12), and
a second subassembly (111) comprising a second impeller flange (11),
wherein any of the first and second impeller flanges (11, 12) comprises a plurality of integrally formed impeller blades (17), wherein the impeller blades (17) and the first and second impeller flanges constitute an impeller (16),
wherein the first subassembly (112) comprises a rotatable inlet shroud (18) integrally formed with the first impeller flange (12), wherein the rotatable inlet shroud (18) is arranged to guide the air flow entering the impeller (16), and wherein the rotatable inlet shroud (18) exhibits together with the first impeller flange (12) a U-shaped cross-section that is open towards the radial outside,
**characterized in that** at least one impeller blade (17) arranged on one of the first or second impeller flanges (11, 12) comprises at least one tab (113) arranged to mate with a corresponding inlet cone (114) arranged on the other of the two impeller flanges, wherein the least one tab (113) is arranged to be deformed to expand when in a mating position with the corresponding inlet cone (114), thereby securing the two subassemblies (111, 112) together.

2. The centrifugal fan assembly (3) according to claim 1, wherein the second subassembly (111) comprises a backplate (19) integrally formed with the second impeller flange (11), wherein the backplate (19) is arranged to guide the air flow entering the impeller (16).

3. The centrifugal fan assembly (3) according to claim 2, wherein the backplate (19) comprises a conical shape.

4. The centrifugal fan assembly (3) according to any previous claim, wherein at least one impeller blade (17) arranged on one of the two impeller flanges (11, 12) comprises a plurality of tabs (113) arranged to mate with respective corresponding inlet cones (114) arranged on the other of the two impeller flanges, wherein the tabs (113) are arranged to be deformed when in a mating position with the respective corresponding inlet cones (114), thereby securing the two subassemblies (111, 112) together.

5. The centrifugal fan assembly (3) according to any previous claim, wherein the first and the second subassemblies (111, 112) comprise plastics.

6. The centrifugal fan assembly (3) according to claim 5, wherein at least one tab (113) is deformed using a thermoplastic staking technique, preferably any of thermal tooling, cold forming, thermal punch, ultrasonic staking, cold forming, infrared staking, hot air cold upset, impulse staking, and spin riveting.

7. The centrifugal fan assembly (3) according to any previous claim, wherein at least one impeller blade (17) is arranged substantially aligned with the axial direction of the centrifugal fan assembly (3).

8. The centrifugal fan assembly (3) according to any previous claim, wherein at least one impeller blade (17) is inclined with respect to a radial direction of the centrifugal fan assembly to direct the flow of air in the radial direction when the air is exiting the centrifugal fan assembly (3).

9. The centrifugal fan assembly (3) according to claim 8, wherein at least one impeller blade (17) is inclined with respect to an axial direction of the centrifugal fan assembly to direct the flow of air in the axial direction when the air is exiting the centrifugal fan assembly (3).

10. A vehicle comprising the centrifugal fan assembly (3) according to any of claims 1-9.

11. A method for producing a centrifugal fan assembly (3), the method comprising:
providing (S1) a first subassembly (112) comprising a first impeller flange (12), wherein the first subassembly (112) comprises a rotatable inlet shroud (18) integrally formed with the first impeller flange (12);
providing (S2) a second subassembly (111) comprising a second impeller flange (11);
arranging (S3) a plurality of integrally formed impeller blades (17) on any of the first and second impeller flanges (11, 12), thereby the impeller blades (17) and the first and second impeller flanges constitute an impeller (16), wherein the rotatable inlet shroud (18) is arranged to guide the air flow entering the impeller (16), and wherein the rotatable inlet shroud (18) exhibits together with the first impeller flange (12) a U-shaped cross-section that is open towards the radial outside;
arranging (S4) at least one tab (113) on at least one impeller blade (17) arranged on one of the two impeller flanges (11, 12);
arranging (S5) a corresponding inlet cone (114) on the other of the two impeller flanges (11, 12), wherein the at least one tab (113) is arranged to mate with the corresponding inlet cone (114); and
deforming (S6) the least one tab (113) to expand when in a mating position with the corresponding inlet cone (114), thereby securing the two subassemblies (111, 112) together.

12. A heat exchanger system (1) for a vehicle, the heat exchanger system comprising:
at least one heat exchanger (2);
the centrifugal fan assembly (3) according to any of claims 1-9;
a stationary inlet shroud (4) located between the at least one heat exchanger (2) and the fan assembly (3), configured for directing air flow exiting the at least one heat exchanger (2) towards the rotatable inlet shroud (18) of the fan assembly (3); and
a stator (13) with a plurality of stationary stator blades (14) located radially or semi-radially outside the impeller (16) for conversion of fluid dynamic pressure to fluid static pressure of the air flow.

## Patentansprüche

1. Zentrifugalgebläsebaugruppe (3) zum Verbessern von Luftströmung durch einen Wärmetauscher (2), wobei die Gebläsebaugruppe (3) Folgendes umfasst:
eine erste Unterbaugruppe (112), umfassend einen ersten Laufradflansch (12) und
eine zweite Unterbaugruppe (111), umfassend einen zweiten Laufradflansch (11),
wobei einer des ersten und des zweiten Laufradflansches (11, 12) eine Vielzahl einstückig gebildeter Laufradschaufeln (17) umfasst, wobei die Laufradschaufeln (17) und der erste und der zweite Laufradflansch ein Laufrad (16) darstellen,
wobei die erste Unterbaugruppe (112) ein drehbares Einlassdeckband (18) umfasst, das einstückig mit dem ersten Laufradflansch (12) gebildet ist, wobei das drehbare Einlassdeckband (18) dazu angeordnet ist, die Luftströmung, die in das Laufrad (16) eintritt, zu leiten, und wobei das drehbare Einlassdeckband (18) zusammen mit dem ersten Laufradflansch (12) einen U-förmigen Querschnitt aufweist, der in Richtung des radialen Äußeren offen ist,
**dadurch gekennzeichnet, dass** mindestens eine Laufradschaufel (17), die auf einem des ersten oder des zweiten Laufradflansches (11, 12) angeordnet ist, mindestens einen Zapfen (113) umfasst, der dazu angeordnet ist, mit einem entsprechenden Einlasskonus (114) zusammenzupassen, der auf dem anderen der zwei Laufradflansche angeordnet ist, wobei der mindestens eine Zapfen (113) dazu angeordnet ist, verformt zu werden, um sich auszudehnen, wenn er sich in einer zusammenpassenden Position mit dem entsprechenden Einlasskonus (114) befindet, wodurch die zwei Unterbaugruppen (111, 112) aneinander gesichert werden.

2. Zentrifugalgebläsebaugruppe (3) nach Anspruch 1, wobei die zweite Unterbaugruppe (111) eine Rückplatte (19) umfasst, die einstückig mit dem zweiten Laufradflansch (11) gebildet ist, wobei die Rückplatte (19) dazu angeordnet ist, die Luftströmung, die in das Laufrad (16) eintritt, zu leiten.

3. Zentrifugalgebläsebaugruppe (3) nach Anspruch 2, wobei die Rückplatte (19) eine konische Form umfasst.

4. Zentrifugalgebläsebaugruppe (3) nach einem der vorhergehenden Ansprüche, wobei mindestens eine Laufradschaufel (17), die auf einem der zwei Laufradflansche (11, 12) angeordnet ist, eine Vielzahl von Zapfen (113) umfasst, die dazu angeordnet ist, mit jeweiligen entsprechenden Einlasskonen (114) zusammenzupassen, die auf der anderen der zwei Laufradschaufeln angeordnet sind, wobei die Zapfen (113) dazu angeordnet sind, verformt zu werden, wenn sie sich in einer zusammenpassenden Position mit den jeweiligen entsprechenden Einlasskonen (114) befinden, wodurch die zwei Unterbaugruppen (111, 112) aneinander gesichert werden.

5. Zentrifugalgebläsebaugruppe (3) nach einem der vorhergehenden Ansprüche, wobei die erste und die zweite Unterbaugruppe (111, 112) Kunststoffe umfassen.

6. Zentrifugalgebläsebaugruppe (3) nach Anspruch 5, wobei mindestens ein Zapfen (113) unter Verwendung einer thermoplastischen Heißverstemmungstechnik, bevorzugt eines von thermischem Bearbeiten, Kaltformen, Thermostanzen, Ultraschallheißverstemmen, Kaltformen, Infrarotheißverstemmen, Hot-Air/Cold-Upset, Impulsheißverstemmen und Drehnieten, verformt wird.

7. Zentrifugalgebläsebaugruppe (3) nach einem der vorhergehenden Ansprüche, wobei mindestens eine Laufradschaufel (17) im Wesentlichen mit der axialen Richtung der Zentrifugalgebläsebaugruppe (3) fluchtend angeordnet ist.

8. Zentrifugalgebläsebaugruppe (3) nach einem der vorhergehenden Ansprüche, wobei mindestens eine Laufradschaufel (17) in Bezug auf eine radiale Richtung der Zentrifugalgebläsebaugruppe geneigt ist, um die Luftströmung in die radiale Richtung zu leiten, wenn die Luft aus der Zentrifugalgebläsebaugruppe (3) austritt.

9. Zentrifugalgebläsebaugruppe (3) nach Anspruch 8, wobei mindestens eine Laufradschaufel (17) in Bezug auf eine axiale Richtung der Zentrifugalgebläsebaugruppe geneigt ist, um die Luftströmung in die axiale Richtung zu leiten, wenn die Luft aus der Zentrifugalgebläsebaugruppe (3) austritt.

10. Fahrzeug, umfassend die Zentrifugalgebläsebaugruppe (3) nach einem der Ansprüche 1-9.

11. Verfahren zum Herstellen einer Zentrifugalgebläsebaugruppe (3), wobei das Verfahren Folgendes umfasst:
Bereitstellen (S1) einer ersten Unterbaugruppe (112), umfassend einen ersten Laufradflansch (12), wobei die erste Unterbaugruppe (112) ein drehbares Einlassdeckband (18) umfasst, das einstückig mit dem ersten Laufradflansch (12) gebildet ist;
Bereitstellen (S2) einer zweiten Unterbaugruppe (111), umfassend einen zweiten Laufradflansch (11);
Anordnen (S3) einer Vielzahl einstückig gebildeter Laufradschaufeln (17) auf einem des ersten und des zweiten Laufradflansches (11, 12), wodurch die Laufradschaufeln (17) und der erste und der zweite Laufradflansch ein Laufrad (16) darstellen, wobei das drehbare Einlassdeckband (18) dazu angeordnet ist, die Luftströmung, die in das Laufrad (16) eintritt, zu leiten, und wobei das drehbare Einlassdeckband (18) zusammen mit dem ersten Laufradflansch (12) einen U-förmigen Querschnitt aufweist, der in Richtung des radialen Äußeren offen ist;
Anordnen (S4) mindestens eines Zapfens (113) auf mindestens einer Laufradschaufel (17), die auf einem der zwei Laufradflansche (11, 12) angeordnet ist;
Anordnen (S5) eines entsprechenden Einlasskonus (114) auf dem anderen der zwei Laufradflansche (11, 12), wobei der mindestens eine Zapfen (113) dazu angeordnet ist, mit dem entsprechenden Einlasskonus (114) zusammenzupassen; und
Verformen (S6) des mindestens einen Zapfens (113), um sich auszudehnen, wenn er sich in einer zusammenpassenden Position mit dem entsprechenden Einlasskonus (114) befindet, wodurch die zwei Unterbaugruppen (111, 112) aneinander gesichert werden.

12. Wärmetauschersystem (1) für ein Fahrzeug, wobei das Wärmetauschersystem Folgendes umfasst:
mindestens einen Wärmetauscher (2);
die Zentrifugalgebläsebaugruppe (3) nach einem der Ansprüche 1-9;
ein stationäres Einlassdeckband (4), das sich zwischen dem mindestens einen Wärmetauscher (2) und der Gebläsebaugruppe (3) befindet und dazu konfiguriert ist, Luftströmung, die aus dem mindestens einen Wärmetauscher (2) austritt, in Richtung des drehbaren Einlassdeckbands (18) der Gebläsebaugruppe (3) zu leiten; und
einen Stator (13) mit einer Vielzahl stationärer Statorschaufeln (14), die sich radial oder halbradial außerhalb des Laufrads (16) befindet, zum Umwandeln fluiddynamischen Drucks in fluidstatischen Druck der Luftströmung.

## Revendications

1. Ensemble ventilateur centrifuge (3) pour améliorer l'écoulement d'air à travers un échangeur de chaleur (2), l'ensemble ventilateur (3) comprenant :
un premier sous-ensemble (112) comprenant une première bride de roue (12), et
un second sous-ensemble (111) comprenant une seconde bride de roue (11),
dans lequel l'une quelconque des première et seconde brides de roue (11, 12) comprend une pluralité de pales de roue formées d'un seul tenant (17), dans lequel les pales de roue (17) et les première et seconde brides de roue constituent une roue (16),
dans lequel le premier sous-ensemble (112) comprend un carénage d'entrée rotatif (18) formé d'un seul tenant avec la première bride de roue (12), dans lequel le carénage d'entrée rotatif (18) est agencé pour guider le flux d'air entrant dans la roue (16), et dans lequel le carénage d'entrée rotatif (18) présente avec la première bride de roue (12) une section transversale en forme de U qui est ouverte vers l'extérieur radial,
**caractérisé en ce qu'**au moins une pale de roue (17) agencée sur l'une des première ou seconde brides de roue (11, 12) comprend au moins une languette (113) agencée pour s'accoupler avec un cône d'entrée correspondant (114) agencé sur l'autre des deux brides de roue, dans lequel l'au moins une languette (113) est agencée pour être déformée pour se dilater lorsqu'elle est dans une position d'accouplement avec le cône d'entrée correspondant (114), fixant ainsi les deux sous-ensembles (111, 112) l'un à l'autre.

2. Ensemble ventilateur centrifuge (3) selon la revendication 1, dans lequel le second sous-ensemble (111) comprend une plaque arrière (19) formée d'un seul tenant avec la seconde bride de roue (11), dans lequel la plaque arrière (19) est agencée pour guider le flux d'air entrant dans la roue (16) .

3. Ensemble ventilateur centrifuge (3) selon la revendication 2, dans lequel la plaque arrière (19) comprend une forme conique.

4. Ensemble ventilateur centrifuge (3) selon une quelconque revendication précédente, dans lequel au moins une pale de roue (17) agencée sur l'une des deux brides de roue (11, 12) comprend une pluralité de languettes (113) agencées pour s'accoupler avec des cônes d'entrée correspondants respectifs (114) agencés sur l'autre des deux brides de roue, dans lequel les languettes (113) sont agencées pour être déformées lorsqu'elles sont dans une position d'accouplement avec les cônes d'entrée correspondants respectifs (114), fixant ainsi les deux sous-ensembles (111, 112) l'un à l'autre.

5. Ensemble ventilateur centrifuge (3) selon une quelconque revendication précédente, dans lequel les premier et second sous-ensembles (111, 112) comprennent des matières plastiques.

6. Ensemble ventilateur centrifuge (3) selon la revendication 5, dans lequel au moins une languette (113) est déformée à l'aide d'une technique de sertissage thermoplastique, de préférence l'une quelconque des techniques d'outillage thermique, de formage à froid, de poinçonnage thermique, de sertissage par ultrasons, de formage à froid, de sertissage infrarouge, de refoulement à froid par air chaud, de sertissage par impulsion et de rivetage par rotation.

7. Ensemble ventilateur centrifuge (3) selon une quelconque revendication précédente, dans lequel au moins une pale de roue (17) est agencée sensiblement alignée avec la direction axiale de l'ensemble ventilateur centrifuge (3).

8. Ensemble ventilateur centrifuge (3) selon une quelconque revendication précédente, dans lequel au moins une pale de roue (17) est inclinée par rapport à une direction radiale de l'ensemble ventilateur centrifuge pour diriger le flux d'air dans la direction radiale lorsque l'air sort de l'ensemble ventilateur centrifuge (3).

9. Ensemble ventilateur centrifuge (3) selon la revendication 8, dans lequel au moins une pale de roue (17) est inclinée par rapport à une direction axiale de l'ensemble ventilateur centrifuge pour diriger le flux d'air dans la direction axiale lorsque l'air sort de l'ensemble ventilateur centrifuge (3).

10. Véhicule comprenant l'ensemble ventilateur centrifuge (3) selon l'une quelconque des revendications 1 à 9.

11. Procédé de fabrication d'un ensemble ventilateur centrifuge (3), le procédé comprenant :
la fourniture (S1) d'un premier sous-ensemble (112) comprenant une première bride de roue (12), dans lequel le premier sous-ensemble (112) comprend un carénage d'entrée rotatif (18) formé d'un seul tenant avec la première bride de roue (12) ;
la fourniture (S2) d'un second sous-ensemble (111) comprenant une seconde bride de roue (11) ;
l'agencement (S3) d'une pluralité de pales de roue formées d'un seul tenant (17) sur l'une quelconque des première et seconde brides de roue (11, 12), de sorte que les pales de roue (17) et les première et seconde brides de roue constituent une roue (16), dans lequel le carénage d'entrée rotatif (18) est agencé pour guider le flux d'air entrant dans la roue (16), et dans lequel le carénage d'entrée rotatif (18) présente avec la première bride de roue (12) une section transversale en forme de U qui est ouverte vers l'extérieur radial ;
l'agencement (S4) d'au moins une languette (113) sur au moins une pale de roue (17) agencée sur l'une des deux brides de roue (11, 12) ;
l'agencement (S5) d'un cône d'entrée correspondant (114) sur l'autre des deux brides de roue (11, 12), dans lequel l'au moins une languette (113) est agencée pour s'accoupler avec le cône d'entrée correspondant (114) ; et
la déformation (S6) de l'au moins une languette (113) pour qu'elle se dilate lorsqu'elle est dans une position d'accouplement avec le cône d'entrée correspondant (114), fixant ainsi les deux sous-ensembles (111, 112) l'un à l'autre.

12. Système d'échangeur de chaleur (1) pour un véhicule, le système d'échangeur de chaleur comprenant :
au moins un échangeur de chaleur (2) ;
l'ensemble ventilateur centrifuge (3) selon l'une quelconque des revendications 1 à 9 ;
un carénage d'entrée stationnaire (4) situé entre l'au moins un échangeur de chaleur (2) et l'ensemble ventilateur (3), configuré pour diriger le flux d'air sortant de l'au au moins un échangeur de chaleur (2) vers le carénage d'entrée rotatif (18) de l'ensemble ventilateur (3) ; et
un stator (13) avec une pluralité de pales de stator stationnaires (14) situées radialement ou semi-radialement à l'extérieur de la roue (16) pour la conversion de la pression dynamique de fluide en pression statique de fluide du flux d'air.
